Europäisches Patentamt

European Patent Office

Office européen des brevets

(11) Publication number: **0 183 539 B1**

## EUROPEAN PATENT SPECIFICATION

(45) Date of publication of patent specification: **01.04.92** (51) Int. Cl.5: **H04N 1/46**

(21) Application number: **85308619.7**

(22) Date of filing: **27.11.85**

(54) **Colour graphics data processing apparatus.**

(30) Priority: **27.11.84 JP 250247/84**
**28.11.84 JP 251270/84**
**29.11.84 JP 252136/84**

(43) Date of publication of application:
**04.06.86 Bulletin  86/23**

(45) Publication of the grant of the patent:
**01.04.92 Bulletin  92/14**

(84) Designated Contracting States:
**AT DE FR GB NL**

(56) References cited:
**EP-A- 0 159 691**
**GB-A- 2 032 727**
**US-A- 4 364 084**

**COMPUTER GRAPHICS, vol. 16, no. 3, July 1982, pages 297-307, ACM, US; P. HECKBERT: "Color image quantization for frame buffer display"**

**DATAMATION, vol. 25, no. 5, May 1979, pages 150-156, Barrington, US; R.G. SHOUP: "'Superpaint' ... the digital animator"**

(73) Proprietor: **SONY CORPORATION**
**7-35 Kitashinagawa 6-Chome Shinagawa-ku Tokyo 141(JP)**

(72) Inventor: **Hoshino, Masaaki c/o Patents Division**
**Sony Corporation 6-7-35 Kitashinagawa Shinagawa-ku Tokyo 141(JP)**
Inventor: **Kawakami, Itaru c/o Patents Division Sony Corporation 6-7-35 Kitashinagawa Shinagawa-ku Tokyo 141(JP)**

(74) Representative: **Thomas, Christopher Hugo et al**
**D Young & Co 10 Staple Inn London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

This invention relates to colour graphics data processing apparatus, and to methods of processing computer graphics data.

Selecting the colours of a picture to be displayed using computer graphics techniques is an important task in the computer graphics field. This becomes even more important when a video image derived from a video signal source, such as a video tape recorder or video disc player, is first stored in a memory and then subsequently displayed as a still picture using computer graphics techniques. Generally, the video signal image is processed using computer graphics techniques and such processed image data are stored in a memory. It is known to obtain such computer display of a still picture using a so-called colour palette that contains a fixed, and usually limited, number of colours used in the display of the colour picture. The colour palette is really a digital memory unit that retains a limited number of colours used in generating the display. The colours available in the colour palette are defined and fixed therein in advance and typically there is only a limited number of colours, for example, sixteen.

In previously proposed colour graphics data processing systems, the colours that can be used to display the picture may be selected from a relatively large number of colours that are available independently. In that case, the colours are selected for use by the operator or user who visually checks the original picture being displayed on the monitor and then selects colours to be used to make up the colour palette for display of the still picture using the computer graphics. That is, a time-consuming operation must occur in which the computer graphics operator selects the defined colours for the colour palette by visual/manual means.

Then, when the user or operator wishes to produce a computer graphics colour picture that is substantially the same as the original picture supplied from the video signal source, it is frequently quite difficult to reproduce the desired colours faithfully using only the sixteen predetermined, fixed colours that have been selected in advance.

On the other hand, with this known method of selecting and specifying the sixteen colours that are available for use in the colour palette, it is possible to reproduce a picture having colours relatively close to the original picture by defining the colour palette several times. This repetitive method is labourious for the operator, and it has proved quite difficult for the operator to select the optimum sixteen colours to define the colour palette.

European patent specification EP-A2-0 159 691 (Article 54(3) EPC) and 'Computer Graphics', vol. 16, no. 3, July 1982, pages 297 to 307 disclose apparatus similar to the preamble of claim 1.

According to the present invention there is provided a computer colour graphics data processing apparatus in which an incoming analog colour video signal from an external source is digitally processed to form and display a corresponding video image, said data processing apparatus comprising:

an analog-to-digital (A/D) converter for converting an input analog colour video signal to a digital colour video signal;

a first memory supplied with said digital colour video signal and for storing a desired one-picture portion thereof;

a video display apparatus for displaying an analog colour video signal derived by a digital-to-analog (D/A) converter from said digital colour video signal from said A/D converter;

counting means in a microcomputer for sequentially reading digital colour video data stored in said first memory thereby to calculate appearance frequencies of pixel colour data;

colour determining means responsive to the frequencies of appearance of said colour data for selecting a predetermined number of colours having higher frequencies of appearance; and

a colour palette for converting the colour data from said colour determining means to output colour data that are closest to said predetermined number of colours having higher frequencies of appearance;

whereby the colour data of respective pixels are assigned to desired colours defined by said colour palette and are output by said colour palette and displayed on said video display apparatus through said D/A converter, resulting in production of a computer graphics image similar to the original picture image;

characterized by:

a cursor provided in said microcomputer, for determining one desired area of a picture when said output digital video signal from said A/D converter is displayed by said video display apparatus; and

a switch for selectively supplying to said D/A converter outputs from said A/D converter and from said first memory, or from said colour palette;

whereby an area that the user wishes to emphasize in the picture on the video display apparatus is designated by said cursor and said counting means sequentially reads said digital colour video stored in said first memory and corresponding to said area of said picture on said video display apparatus designated by said cursor.

The invention will now be described with reference to the accompanying drawings, throughout which like parts are referred to by like references, and in which:

Figure 1 is a schematic in block diagram form of an embodiment of computer graphics data processing apparatus according to the present invention;

Figure 2 is a representation of an 8-bit data word that forms a picture element of a colour graphics display;

Figure 3 is a representation of a video monitor screen formed of 8-bit picture elements;

Figure 4 is a pictorial representation of a video monitor screen formed of 4-bit picture elements;

Figures 5A to 5D are pictorial representations of a cathode ray tube having graphic information displayed thereon;

Figure 6 is a graphical representation of the frequency of appearance of various, non-specified colours in colour graphics data;

Figure 7 is a flow chart showing a method of determining colours to be selected for a colour palette employed in the system of Figure 1; and

Figure 8 is a graphical representation of a colour converter for use in converting colour data used in a colour palette employed in the system of Figure 1.

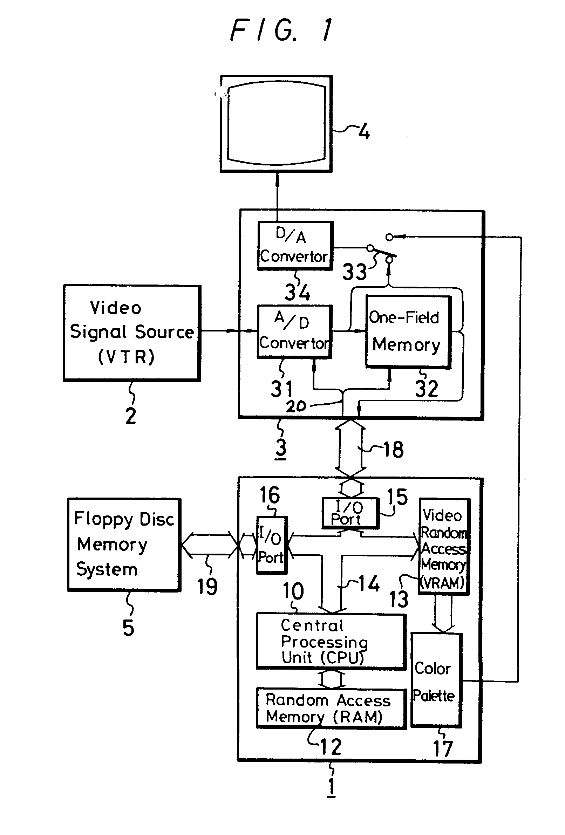

Figure 1 schematically illustrates an overall assembly of an embodiment of colour graphics data processing apparatus according to the present invention, in which a microcomputer 1 includes a central processing unit (CPU) 10 and a random access memory (RAM) 12, as is typically the case in such microcomputing apparatus. In the microcomputer 1, a video random access memory (VRAM) 13 is provided to store video data, and it is in data communication with the CPU 10 by means of a bi-directional input/output (I/O) data bus 14. The elements located separate and apart from the microcomputer 1, that is, the peripheral apparatus, are connected to the microcomputer 1 through input/output (I/O) ports 15 and 16, which comprise buffers, and are also in data communication with the other elements of the microcomputer 1 by means of the data bus 14. The video data that are stored in the VRAM 13 may be supplied through a colour palette 17 to a video monitor/receiver 4 as colour graphics data. That is, the system provides for monitoring the processed colour image by reading the colour data from the colour palette 17 using the image data stored in the VRAM 13 as address data. As will be described below, the colour palette 17 provides sixteen possible colours for display, which can be selected from 4096 ($2^{12}$) colours and, thus, the colour graphics display is formed of these sixteen selected colours. As is known, unlike conventional television signals, there is a limit to the digital field available for each word and typically in such computer graphics only enough digital storage space for sixteen different colours is available in the colour palette.

The video image to be reproduced using this computer graphics system can be obtained from a video signal source 2, such as a video tape recorder or video disc player or video camera. The analog video signal produced by the video source 2 is fed to a video processor circuit 3, which includes an A/D converter 31, that converts the input analog video signal to a digital video signal. This digital video signal from the A/D converter 31 is fed to a memory 32 that has a capacity to store only one field, that is, one picture of the digital video signal produced from the A/D converter 31. The video processor circuit 3 is in data communication with the microcomputer 1 by means of the bi-directional data bus 18 that is connected to the I/O port 15. The video processor circuit 3 is also connected to the microcomputer 1 by a selector switch 33 that has one fixed terminal connected to an output of the colour palette 17. The switch 33 operates selectively to switch between the digital video signal fed by the A/D converter 31 connected to the other fixed terminal thereof and the digital video signal, which is produced by the microcomputer 1. The selected connection of the switch 33 is under command of a keyboard (not shown) of the microcomputer 1 and the switch 33 connects the selected signal to a D/A converter 34 and, thence, to the monitor/receiver 4 for visual display. The monitor/receiver 4 can be a conventional cathode ray tube (CRT) display. As a further system peripheral, a floppy disc memory 5 is provided that is connected to the I/O port 16 by the data bus 19. The floppy disc memory 5 is operated as a video RAM similar to the VRAM 13 but, of course, has a greater memory capacity.

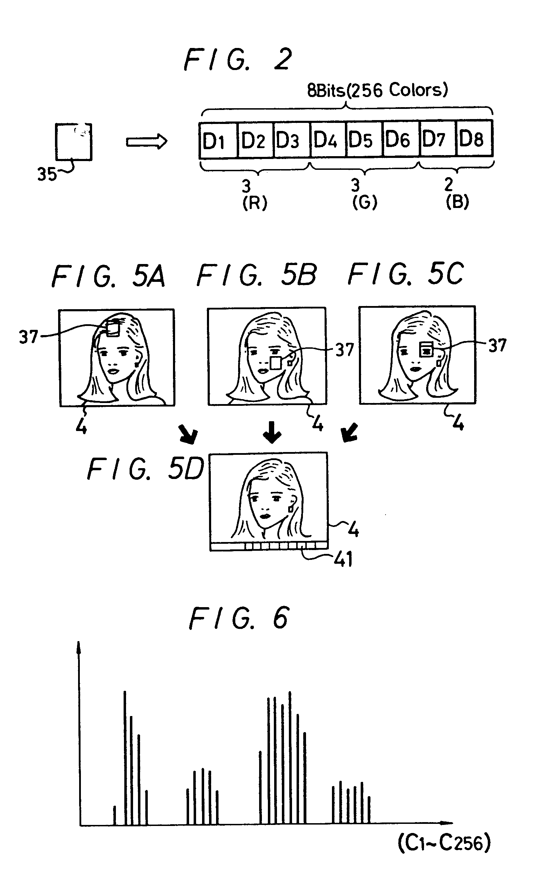

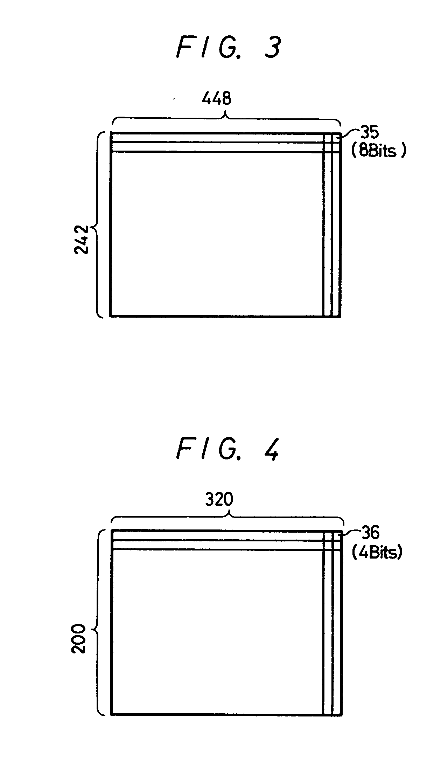

In operation of the graphics colour data processing apparatus shown in Figure 1, as the reproduced signal from the video source 2, which may comprise a video tape recorder, is supplied to the video processor circuit 3, each picture element, hereinafter referred to as a pixel, is converted to an 8-bit colour data word by the A/D converter 31. As shown clearly in Figure 2, in that 8-bit word format, the colour data comprises the well-known RGB signal, that is, the colour data are divided into red, green and blue segments, in which the red data segment is formed of three bits, the green data segment is formed of three bits, and the blue data segment is formed of two bits. This digitized video signal, arranged such that each picture element forms an 8-bit data word, is fed from the A/D converter 31 to one fixed terminal of the switch 33 and, in the switch position shown in Figure 1, the digitally converted video signal is fed back to the D/A converter 34 to be reconverted to the original analog signal and fed to the monitor/receiver 4 for visual display. This then is the original picture that is ultimately to be displayed utilizing the colour graphics data processing apparatus.

In addition to supplying the digital video signal from the A/D converter 31 to a fixed terminal of the switch 33, this signal is also supplied to the input of the memory 32, whereby a signal corresponding to one picture at a predetermined time point, that is, a video signal comprising one field of the signal being displayed on the monitor/receiver 4, is written into the memory 32 in response to a suitable write command issued by the microcomputer 1 and fed thereto on a control line 20 by the data bus 18. The generation of such write commands by a microcomputer are, of course, well known.

In response to a further command from the microcomputer 1, the single field of the video signal stored in the memory 32 will ultimately be processed and converted to colour picture data formed of the sixteen colours that are defined by the colour palette 17, as will be described below. Subsequently, these colour picture data, as converted through the operation of the colour palette 17, are transferred back to be stored in the floppy disc of the floppy disc memory 5, and such transfer can take place under supervision of the CPU 10 in known fashion. The colour picture data that were stored in the memory 32 are retained until the contents thereof are commanded to be rewritten by the next write command from the microcomputer 1.

The graphic data that will be formed by the microcomputer 1 can be selectively supplied by actuation of the switch 33 to the monitor/receiver 4 for display thereon in place of the original video picture as first processed by the A/D converter 31. Of course, the picture formed by the microcomputer 1 can always be displayed on any other cathode ray tube display, not only on a monitor as shown in Figure 1.

As depicted in Figure 2, the original picture represented by the digital video signal produced by the A/D converter 31, and displayed on the video screen of the monitor/receiver 4, is formed of a plurality of elements such that each picture element (pixel) 35 is formed of eight bits. As shown in Figure 3, these pixels are arranged in a row/column format, such that there are 448 pixels in each row and 242 pixels in each column, for the picture derived from the video source 2. On the other hand, a picture formed on the receiver/monitor 4 derived from the microcomputer 1 will have a different number of pixels in which each pixel is formed of four bits, in place of the eight bits, and a different number of pixels will then make up the video screen. As seen in Figure 4, there are 320 pixels in each row and 200 pixels in each column. Thus, the picture formed by the microcomputer 1 will necessarily be more coarse than the original picture formed by only the A/D and D/A converters 31 and 34, and derived from the video source 2.

In this situation, because the microcomputer 1 is functionally able to select and use sixteen desired colours from a much larger number of colours that are typically available, for example, 4096 ($2^{12}$) colours, colour reproduction corresponding closely to the original can be made. In this particular embodiment, in order to represent, in pleasing and delicate fashion, the colours of the principal or important portions of the original picture, the colour graphics data processing apparatus automatically defines the sixteen colours that are used in the colour palette 17.

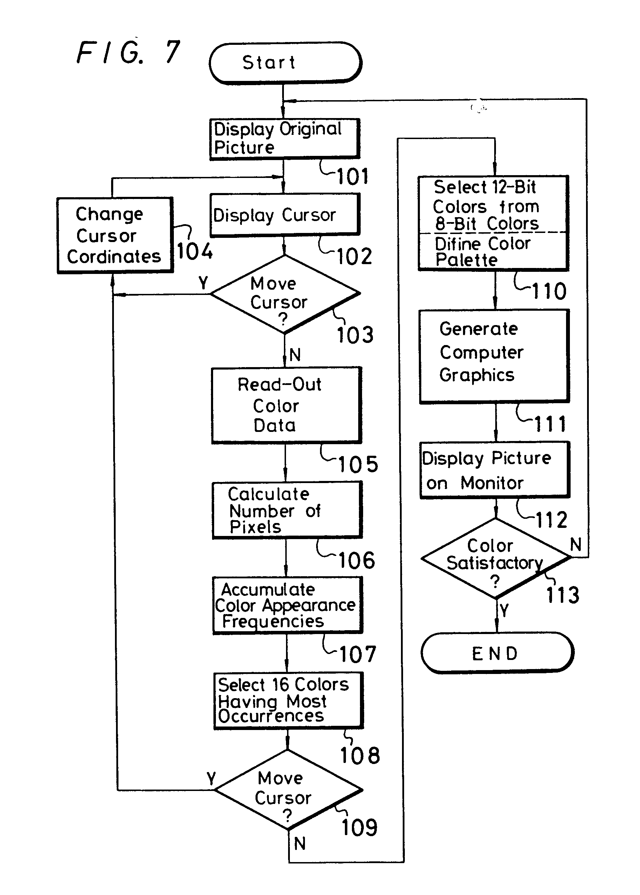

The method utilized for defining the contents of the colour palette 17 will now be described with reference to Figures 5 to 7. More specifically, Figures 5A to 5D are pictorial representations used in explaining one method for defining the contents of the colour palette 17, and in that regard, Figure 7 is a flow chart illustrating a method that could be followed by the microcomputer 1 or by a discrete component system to define such colour palette contents. Referring then to Figure 7, initially when the colour palette defining method is commenced the digital signal from the A/D converter 31 is first passed through the switch 33, reconverted back into the analog signal by the D/A converter 34 and displayed on the receiver/monitor 4 as the original picture. This displayed original picture is the one in Figure 3 that includes many more pixels, as compared with the picture that will ultimately be produced by the microcomputer 1. The step of displaying the original picture is shown at 101 in the flow chart of Figure 7. A cursor is then displayed on the original picture of the monitor/receiver 4 of Figure 1, and the cursor is shown as a rectangle 37 in Figures 5A to 5C. The cursor is generated and displayed at step 102 and, in this method, the cursor 37 is selected to enclose a portion of the picture comprising sixteen by twenty-five pixels. Movement of the cursor 37 can be accomplished using known computer graphic techniques, and in this embodiment the next step 103 is to determine whether the original position of the cursor 37 should be altered. This is a decision made by the user operating the keyboard (not shown) of the microcomputer 1 to determine whether the actual location of the cursor 37 is to be moved. Of course, what is really taking place is that the addresses within the area encircled by the cursor 37 on the screen of the monitor/receiver 4, which correspond to addresses in the memory 32, are specified and, thus, the information contained within the cursor 37 is made available by knowing the respective addresses.

As the next step, the user operates the keyboard (not shown) on the microcomputer 1 to bring the cursor 37 to the location on the colour picture that the user wishes to emphasize, for example, skin tones or hair colour in the images represented in Figures 5A to 5C. This cursor movement is seen to take place in steps 103 and 104 of the method shown in Figure 7 in which, more particularly, at the step 103 it is determined whether the cursor 37 is to be moved or not, and when the present position of the cursor 37 is different from the desired position, the coordinates of the displayed cursor 37 are then altered as represented in the step 104 and the cursor 37 is once again displayed in the step 102. On the other hand, if the cursor 37 is in a desired position as determined by the operator, the routine represented in Figure 7 moves to the next step 105.

Then, the colour data of each pixel of the plurality of pixels, which in this case is 400 pixels contained within the area encircled by the cursor 37, are read out from the memory 32 and latched into the microcomputer 1, and when the colour data of the entire 400 pixels have been latched into the microcomputer 1, the appearance frequency of each colour is calculated, as represented in step 106. Such appearance frequency or frequency of occurrence is diagrammatically represented for one case in Figure 6, in which the appearance frequency distribution of the 256 colours available is shown. The 256 colours available are derived from the 8-bit words that were shown in Figure 2. This type of frequency distribution representation, such as shown in Figure 6, is commonly referred to as a histogram.

Continuing then in Figure 7, the present appearance frequencies are accumulated at step 107, to obtain the appearance frequencies of the colours that have been determined up until now, and the routine sequentially selects the desired sixteen colours from the accumulated frequency colours that have the highest numbers of appearance in step 108. In this embodiment, the initial value of the appearance frequencies is set at zero for each colour, and the appearance frequency of each colour is then sequentially accumulated anew each time the specified area (400 pixels) is changed or moved by movement of the cursor 37. The accumulation of the appearance frequencies can be accumulated for all 256 ($2^8$) colours or from the appearance frequencies of only thirty-two colours based on the next previous sixteen colours and the present sixteen colours. In that case, in practice there will be less than thirty-two colours because some of the colours will overlap. In this way, it is substantially assured that the desired sixteen colours will be selected from the higher appearance frequencies of all of the 256 colours.

If it does not appear to the user that a colour picture close to the original picture can be produced using the sixteen colours selected so far, the user must move the cursor 37 to a different position by operating the keyboard (not shown) of the microcomputer 1. It is understood, of course, that the term keyboard is used to include a joystick or other device capable of being manipulated to change the position of the cursor 37 on the screen, and that what really is taking place is that the addresses relative to the memory 32 are being moved rather than the data being taken from the screen itself. In any event, at step 109, if it is determined that the cursor 37 is to be moved to another position and the routine goes back to the step 104 in which the coordinates of the cursor 37 appearing on the screen are changed, and the cursor 37 is displayed in its newly specified position.

For example, as represented in Figures 5A to 5D, the cursor 37 is moved on a depiction of a human face from a position corresponding to the person's hair, as in Figure 5A, to the position of the person's cheek, as in Figure 5B. Thereafter, the steps 102 to 107, as explained above, are executed and once again the accumulated appearance frequencies of the respective colours are calculated and again the sixteen desired colours having the sixteen sequential highest frequency appearances are selected.

When the cursor 37 is arranged as is shown in Figures 5A to 5C, then sixteen colours are initially selected for the colour palette 17 based on the colour of the hair, as seen in Figure 5A, then sixteen colours are selected on the basis of the skin tones as seen in Figure 5B, and then sixteen colours are selected based on the eye colour as seen in Figure 5C. If a further step of cursor movement as determined in the step 109 is provided between the steps 107 and 108 in the routine shown in Figure 7, sixteen colours would not necessarily be selected at each position of the cursor 37 but the appearance frequencies of the respective colours are determined based on colour information from the plurality of important portions designated by the cursor 37, such as the three shown in Figures 5A to 5C, and the sixteen colours of the colour palette 17 are then immediately selected.

After sixteen colours have been selected based on the colours of the important portions designated by locations of the cursor 37 as described above, the colours on the colour palette 17 corresponding to the sixteen colours, which are formed as 4-bit colour data words, are selected from the previously prepared 4096 colours that are available based on 12-bit colour data words, in accordance with a conversion table. Such conversion table is required to convert the 8-bit words to the 12-bit words and, upon performing such conversion in step 110, the colour palette colours are defined. In other words, based upon the steps performed in accordance with the routine of Figure 7 described above, sixteen colours are first selected from an available 256 colours formed of 8-bit colour data words and then sixteen colours are selected that respectively correspond to the colours closest to the desired colours from 4096 colours formed of 12-bit words, in this way, the selected sixteen colours are defined as the colour palette 17. Such sixteen colours as defined in this fashion are stored in the floppy disc memory 5 under control of the CPU 1 by transferring through the I/O port 16 and data bus 19.

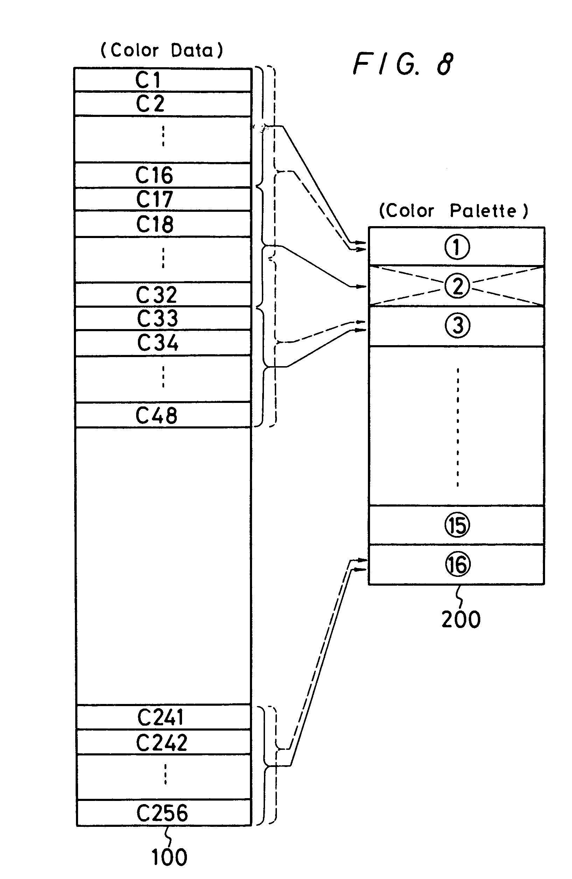

After the colour palette 17 has been defined as described above, the method then proceeds to generate the desired computer graphics as represented in step 111. In this operation, a corresponding relationship is selected between the colours of the picture stored in the memory 32 and the sixteen colours that have now been calculated for the colour palette 17. Figure 8 is a graphical representation of the corresponding relationship between the various colours and, referring to Figure 8, the colour data are shown at 100 as comprising 256 8-bit colour data words, C1 to C256, from which the colour data of the picture from the memory 32 can be selected. The colour palette 17 is represented at 200 and the various selected sixteen colours are shown arranged from ① to ⑯. In this case, as represented by the solid brackets and arrows in Figure 8, the sixteen colours forming the colour palette 17 represented at 200 are selected from the 256 colours such that colour ① is assigned to, for example, the data words C1 to C16, the colour ② is assigned to the data words C17 to C32, and so on down through the 256 colours available. In accordance with this conversion table represented in Figure 8, the colours ① to ⑯ are selected for the respective dots or picture elements making up the picture from the memory 32.

After a colour corresponding to every dot or picture element of the picture retained within the memory 32 has been selected, the transfer command for transferring the picture of one field retained within the memory 32 to the microcomputer 1 is executed so that, in accordance with the conversion table represented in Figure 8, the colour of each pixel of the picture displayed by the microcomputer 1 is assigned a 4-bit data word from one of the sixteen colours and then this 4-bit data is written into the floppy disc memory 5. At that point, the switch 33 is changed over by operating the keyboard (not shown) of the microcomputer 1, and the colour picture formed by the microcomputer 1, which is now also stored in the floppy disc memory 5, is displayed on the monitor/receiver 4 as represented in Figure 5D, having a format shown in Figure 4. Such operation is graphically depicted as the step 112 in the routine in Figure 7. Then, in accordance with the conversion table, the 4-bit colour selection data are converted to the colour data of twelve bits, and each dot is assigned a colour. Then, the displayed computer graphics is compared by the user with the original picture image by changing over the switch 33, typically by operating the keyboard (not shown) of the microcomputer 1. If the user is not satisfied with the selected colours, the definition of the colour palette 17 is once again carried out. More particularly, the steps 101 to 110 are repeated, and the subsequently generated computer graphics is displayed once again on the monitor/receiver 4 by execution of the steps 111 and 112. The decision as to whether the colour image produced following the computer graphic techniques is satisfactory is represented by the decision of the step 113 in the routine of Figure 7. Once the user is satisfied with the colour selected by the colour palette 17, the routine required to define the colour palette 17 terminates.

In the event that there are some colours from the sixteen defined colours which the user does not wish to use, these may be specified. To accommodate this, when the user switches between the actual video image displayed on the monitor/receiver 4 and the computer graphics image displayed on the monitor/receiver 4 by the microcomputer 1, the user can specify the colours which are desired not to be displayed by identifying them by letters such as A, B, and C, which are displayed together with all of the sixteen selected colours at a lower edge portion 41 of the screen of the monitor/receiver 4, as represented in Figure 5D. For example, if the colour ② in Figure 8 is to be inhibited, a corresponding relationship between the remaining fifteen colours on the colour palette 17 and the colours of the memory 32 is then recalculated leaving out all of the colours that would typically be contained with ②. The deletion of the colour ② is represented by the crossed dashed lines in Figure 8. The recalculated relationships are then shown by the dashed brackets and arrows connecting the colour data 100 with the colour palette 200, and in which it is seen that the colour data words C17 to C32 that had previously been made to correspond to the colour ② is now used by the picture of the memory 32 spread between the colours ① and ③ of the colour palette 200. These are chosen as being those colours that are closest to the colour ②. Now, in continuing the example, the colour data of C17 to C24 are made to correspond to the colour ① and the colour data C25 to C32 are made to correspond to the colour ③. Then, in keeping with the conversion table of Figure 8 having corresponding relationships as described above, one colour from the available fifteen colours on a colour palette is selected for each dot of the picture from the memory 32 when a colour graphic is to be displayed on the monitor/receiver 4.

The colour to be excluded from the display need not be limited to a single colour and, thus, when it is desired to inhibit n colours (where n is greater than 1), then the colours of the colour palette 17 equal to (16-n) are used and a new corresponding relationship between the (16-n) colours and the 256 colours provided by the picture stored in the memory 32 is recalculated. In this fashion, the conversion table graphically represented in Figure 8 is renewed. Accordingly, when the user specifies an undesired colour in the already defined colour palette 17 and inhibits the use of such undesired colour, the computer graphic is formed by colours other than the inhibited colour. For example, it is possible for the user to use only warm colours to make a computer graphic with the colours closest to the colour of the original picture selected only from warm colours by inhibiting all use of cool colours. Accordingly, the user can easily generate computer graphics having the desired hue.

With the method described above, when the user desires to generate a computer graphics having colours close to those of the original picture, a colour palette can be defined based upon the colour of an important portion of the original picture, whereby a computer graphic more faithful to the original picture can easily be generated.

Furthermore, because it is not necessary for the user to define the colour palette each time, but only to specify the important portion of the picture by using the cursor, then such defining is performed easily. Also, if a number n of unnecessary colours of a total of N colours on the colour palette are specified, then a conversion table for converting the M colours used in the original picture to the colour palette colours, where M is greater than N, is formed into a conversion table for converting M colours to (N-n) colours, whereby the computer graphics is formed only of the (N-n) colours. In this fashion, the user can, for example, obtain a computer graphics made only of warm colours or only of cool colours, as desired, with relative ease.

## Claims

1. A computer colour graphics data processing apparatus in which an incoming analog colour video signal from an external source (2) is digitally processed to form and display a corresponding video image, said data processing apparatus comprising:
an analog-to-digital (A/D) converter (31) for converting an input analog colour video signal to a digital colour video signal;
a first memory (32) supplied with said digital colour video signal and for storing a desired one-picture portion thereof;
a video display apparatus (4) for displaying an analog colour video signal derived by a digital-to-analog (D/A) converter (34) from said digital colour video signal from said A/D converter (31);
counting means in a microcomputer (1) for sequentially reading digital colour video data stored in said first memory (32) thereby to calculate appearance frequencies of pixel colour data;
colour determining means responsive to the frequencies of appearance of said colour data for selecting a predetermined number of colours having higher frequencies of appearance; and
a colour palette (17) for converting the colour data from said colour determining means to output colour data that are closest to said predetermined number of colours having higher frequencies of appearance;
whereby the colour data of respective pixels are assigned to desired colours defined by said colour palette (17) and are output by said colour palette (17) and displayed on said video display apparatus (4) through said D/A converter (34), resulting in production of a computer graphics image similar to the original picture image;
characterized by:
a cursor (37) provided in said microcomputer (1), for determining one desired area of a picture when said output digital video signal from said A/D converter (31) is displayed by said video display apparatus (4); and
a switch (33) for selectively supplying to said D/A converter (34) outputs from said A/D converter (31) and from said first memory (32), or from said colour palette (17);
whereby an area that the user wishes to emphasize in the picture on the video display apparatus (4) is designated by said cursor (37) and said counting means sequentially reads said digital colour video stored in said first memory (32) and corresponding to said area of said picture on said video display apparatus (4) designated by said cursor (37).

2. Apparatus according to claim 1 further comprising cursor generating means for selecting a predetermined portion of a video screen of said video display apparatus (4).

3. Apparatus according to claim 2 wherein said cursor generating means generates a rectangularly shaped cursor (37) surrounding said desired area.

4. Apparatus according to claim 3 wherein said counting means counts appearance frequencies of colour data by accumulating picture elements within said desired area.

5. Apparatus according to any one of the preceding claims wherein the colour data of said digital video signal from said A/D converter (31) are formed of eight bits.

6. Apparatus according to claim 5 wherein said 8-bit colour data have three bits assigned to red, three bits assigned to green, and two bits assigned to blue.

7. Apparatus according to any one of the preceding claims wherein each display colour of said colour palette (17) is defined by four bits.

8. Apparatus according to any one of the preceding claims wherein said colour palette (17) is capable of selecting sixteen display colours from 4096 colours.

9. Apparatus according to any one of the preceding claims wherein said colour determining means is arranged to select sixteen colours having higher frequencies of appearance.

10. Apparatus according to claim 9 wherein said sixteen colours are each defined by four bits.

11. Apparatus according to any one of the preceding claims further comprising display inhibiting means for inhibiting the display of a colour specified by said display inhibiting means from said colour palette (17).

12. Apparatus according to claim 11 wherein said display inhibiting means includes a warm colour table and a cool colour table, whereby said colour picture can selectively be displayed using only warm colours or only cool colours.

13. Apparatus according to any one of the preceding claims further comprising an external memory (5) for storing said colour data of said digital video signal.

14. Apparatus according to claim 13 wherein said external memory (5) comprises a floppy disc magnetic memory (5).

**Revendications**

1. Appareil de traitement de données pour station graphique couleurs dans lequel, un signal vidéo couleur analogique entrant provenant d'une source externe (2) est traité numériquement pour former et visualiser une image vidéo correspondante, le dit appareil de traitement de données comprenant :

un convertisseur analogique- numérique (31) pour convertir un signal vidéo couleur analogique d'entrée en un signal vidéo couleur numérique ;

une première mémoire (32) alimentée avec ledit signal vidéo couleur numérique et pour stocker une partie dans l'image ;

un appareil de visualisation vidéo (4) pour visualiser un signal vidéo couleur analogique provenant d'un convertisseur numérique- analogique (34) à l'aide du signal vidéo couleur numérique provenant dudit convertisseur analogique- numérique (31) ;

des moyens de comptage dans un micro-ordinateur (1) pour lire séquentiellement les données vidéo couleur numériques stockées dans ladite première mémoire (32) de façon à calculer les fréquences d'apparition des données de couleur de pixel ;

des moyens de détermination de couleurs sensibles aux fréquences d'apparition desdites données couleur pour sélectionner un nombre prédéterminé de couleurs ayant les plus grandes fréquences d'apparition ; et,

une palette de couleurs (17) pour convertir les données de couleur provenant desdits moyens de détermination de couleurs pour fournir en sortie des données de couleur qui sont les plus proches dudit nombre prédéterminé de couleurs ayant la plus haute fréquence d'apparition ;

dans lequel les données de couleur des pixels respectifs sont assignées aux couleurs désirées définies par ladite palette des couleurs (17) et sont fournies en sortie par ladite palette des couleurs (17) et visualisées sur ledit appareil de visualisation vidéo (4) par ledit convertisseur numérique- analogique (34), résultant en la production d'une image pour station graphique semblable à l'image de visualisation initiale ;

caractérisé par :

un curseur (37) produit par ledit micro-ordinateur (1), pour déterminer une zone désirée d'une image quand ledit signal vidéo numérique de sortie provenant dudit convertisseur analogique numérique (31) est visualisé par ledit appareil de visualisation vidéo (4) ; et

un commutateur (33) pour alimenter sélectivement ledit convertisseur numérique- analogique (34) par les sorties provenant dudit convertisseur analogique- numérique (31) et provenant de ladite première mémoire (32), ou provenant de ladite palette de couleurs (17) ;

de façon à ce qu'une zone que l'utilisateur souhaite renforcer dans l'image sur l'appareil de visualisation vidéo (4) soit désignée par ledit curseur (37) et en ce que lesdits moyens de comptage lisent séquentiellement lesdites données vidéo couleur numériques stockées dans ladite première mémoire (32) et correspondant à ladite zone de ladite image sur ledit appareil de visualisation vidéo (4) désignée par ledit curseur (37).

2. Appareil selon la revendication 1 comprenant de plus des moyens générateurs de curseur pour sélectionner une partie prédéterminée d'un écran vidéo dudit appareil (4) d'affichage vidéo.

3. Appareil selon la revendication 2, dans lequel lesdits moyens générateurs de curseur génèrent un curseur (37) de forme rectangulaire entourant ladite zone désignée.

4. Appareil selon la revendication 3, dans lequel lesdits moyens de comptage comptent les fréquences d'apparition des données couleur par accumulation des éléments d'image dans ladite zone désirée.

5. Appareil selon l'une quelconque des revendications précédentes dans lequel les données couleur dudit signal vidéo numérique provenant dudit convertisseur analogiquenumérique (31) sont constituées par des mots 8 bits.

6. Appareil selon la revendication 5, dans lequel lesdites données couleur en mots 8 bits ont 3 bits assignés au rouge, 3 bits assignés au vert, et 2 bits assignés au bleu.

7. Appareil selon l'une quelconque des revendications précédentes, dans lequel chaque couleur d'affichage de ladite palette des couleurs (17) est définie par un mot 4 bits.

8. Appareil selon l'une quelconque des revendications précédentes, dans lequel ladite palette des couleurs (17) est capable de sélectionner seize couleurs d'affichage parmi 4.096 couleurs.

9. Appareil selon l'une quelconque des revendications précédentes, dans lequel lesdits moyens de détermination de couleur sont arrangés pour sélectionner seize couleurs ayant les plus hautes fréquences d'apparition.

10. Appareil selon la revendication 9, dans lequel lesdites seize couleurs sont chacune définie par des mots 4 bits.

11. Appareil selon l'une quelconque des revendications précédentes, comprenant de plus des moyens inhibiteurs d'affichage pour inhiber l'affichage d'une couleur spécifiée par lesdits moyens inhibiteurs d'affichage dans ladite palette des couleurs (17).

12. Appareil selon la revendication 11, dans lequel lesdits moyens inhibiteurs d'affichage comportent une table de couleurs chaudes et une table de couleurs froides, de façon à ce que ladite image couleur puisse sélectivement être visualisée seulement avec les couleurs chaudes ou seulement avec les couleurs froides.

13. Appareil selon l'une quelconque des revendications précédentes, comprenant de plus une mémoire externe (5) pour stocker lesdites données couleur dudit signal vidéo numérique.

14. Appareil selon la revendication 13, dans lequel ladite mémoire externe (5) comporte une disquette magnétique souple (5).

**Patentansprüche**

1. Computer-Farbgraphikdatenverarbeitungsanlage, in der ein ankommendes analoges Farbvideosignal einer externen Quelle (2) digital verarbeitet wird, um ein entsprechendes Videobild zu formen und anzuzeigen, wobei die Datenverarbeitungsanlage enthält:
einen Analog/Digital (A/D)-Umsetzer (31) zur Umsetzung eines analogen Farbvideoeingangssignals in ein digitales Farbvideosignal;
einen ersten Speicher (32), der mit dem digitalen Farbvideosignal gespeist wird, zur Speicherung eines gewünschten Einzelbildteils davon;
eine Videoanzeigevorrichtung (4) zur Anzeige eines analogen Farbvideosignals, das durch einen Digital/Analog (D/A)-Umsetzer (34) von dem digitalen Farbvideosignal von dem A/D-Umsetzer (31) abgeleitet ist;
Zählmittel in einem Mikrocomputer (1) für das aufeinanderfolgende Lesen digitaler Farbvideodaten, die in dem ersten Speicher (32) gespeichert sind, um dadurch Erscheinungsfrequenzen von Pixel-Farbdaten zu berechnen;
Farbbestimmungsmittel, die auf die Erscheinungsfrequenzen der Farbdaten reagieren, um eine vorherbestimmte Anzahl von Farben auszuwählen, die höhere Erscheinungsfrequenzen haben; und
eine Farbpalette (17) zur Umwandlung der Farbdaten der Farbbestimmungsmittel, um Farbdaten auszugeben, die der vorherbestimmten Anzahl von Farben mit höheren Erscheinungsfrequenzen am nächsten kommen; wobei die Farbdaten der entsprechenden Pixel den durch die Farbpalette (17) definierten gewünschten Farben zugeordnet, durch die Farbpalette (17) ausgegeben und auf der Videoanzeigevorrichtung (4) durch den D/A-Umsetzer (34) angezeigt werden, so daß ein Computergraphikbild erzeugt wird, das dem Originalbild ähnlich ist,
**gekennzeichnet** durch:
einen Zeiger (37), der in dem Mikrocomputer (1) vorgesehen ist, zur Festlegung eines gewünschten Bereichs eines Bildes, wenn das digitale Videoausgangssignal des A/D-Umsetzers (31) durch die Videoanzeigevorrichtung (4) angezeigt wird; und
einen Schalter (33) zur wahlweisen Speisung von Ausgangssignalen von dem A/D-Umsetzer (31) und von dem ersten Speicher (32) oder von der Farbpalette (17) zu dem D/A-Umsetzer (34), wobei ein Bereich, den der Benutzer in dem Bild auf der Videoanzeigevorrichtung (4) hervorzuheben wünscht, durch den Zeiger (37) festgelegt wird und das Zählmittel aufeinanderfolgend die digitalen Farbvideodaten liest, die in dem ersten Speicher (32) gespeichert sind und dem Bereich des Bildes auf der Videoanzeigevorrichtung (4), der durch den Zeiger (37) festgelegt ist, entsprechen.

2. Anlage nach Anspruch 1,
**gekennzeichnet** durch Zeigererzeugungsmittel zur Auswahl eines vorherbestimmten Bereichs eines Videoschirms der Videoanzeigevorrichtung (4).

3. Anlage nach Anspruch 2,
dadurch **gekennzeichnet,** daß die Zeigererzeugungsmittel einen rechtwinklig geformten Zeiger (37) erzeugen, der das gewünschte Gebiet umgibt.

4. Anlage nach Anspruch 3,
dadurch **gekennzeichnet,** daß das Zählmittel Erscheinungsfrequenzen von Farbdaten durch Anhäufen von Bildelementen in dem gewünschten Gebiet zählt.

5. Anlage nach einem der vorhergehenden Ansprüche,
dadurch **gekennzeichnet,** daß die Farbdaten des digitalen Videosignals des A/D-Umsetzers (31) aus acht Bits gebildet werden.

6. Anlage nach Anspruch 5,
dadurch **gekennzeichnet**, daß beiden 8-Bit-Farbdaten drei Bits der Farbe rot, drei Bits der Farbe grün und zwei Bits der Farbe blau zugeordnet sind.

7. Anlage nach einem der vorhergehenden Ansprüche,
dadurch **gekennzeichnet,** daß jede Anzeigefarbe der Farbpalette (17) durch vier Bits bestimmt wird.

8. Anlage nach einem der vorhergehenden Ansprüche,
dadurch **gekennzeichnet,** daß die Farbpalette (17) in der Lage ist, 16 Anzeigefarben aus 4096 Farben auszuwählen.

9. Anlage nach einem der vorhergehenden Ansprüche,
dadurch **gekennzeichnet,** daß das Farbbestimmungsmittel zur Auswahl von 16 Farben mit höheren Erscheinungsfrequenzen eingereichtet ist.

10. Anlage nach Anspruch 9,
dadurch **gekennzeichnet,** daß die 16 Farben jeweils durch vier Bits bestimmt sind.

11. Anlage nach einem der vorhergehenden Ansprüche,
dadurch **gekennzeichnet,** daß Anzeigeunterdrükungsmittel vorgesehen sind zur Unterdrükkung der Anzeige einer Farbe, die von den Anzeigeunterdrückungsmitteln von der Farbpalette (17) spezifiziert wird.

12. Anlage nach Anspruch 11,
dadurch **gekennzeichnet,** daß die Anzeigeunterdrückungsmittel eine warme Farbtafel und eine kalte Farbtafel einschließen, wobei das Farbbild wahlweise angezeigt werden kann, indem nur warme Farben oder nur kalte Farben benutzt werden.

13. Anlage nach einem der vorhergehenden Ansprüche,
dadurch **gekennzeichnet,** daß ein externer Speicher (5) zur Speicherung der Farbdaten des digitalen Videosignals vorgesehen ist.

14. Anlage nach Anspruch 13,
dadurch **gekennzeichnet,** daß der externe Speicher (5) einen Floppy-Disk-Magnetspeicher (5) enthält.

## F I G. 1

# F I G. 2

8Bits(256 Colors)

| D1 | D2 | D3 | D4 | D5 | D6 | D7 | D8 |

3 (R)  3 (G)  2 (B)

35

# F I G. 5A   F I G. 5B   F I G. 5C

37

4

37

4

37

4

# F I G. 5D

4

41

# F I G. 6

(C1~C256)

# F I G. 3

448

242

35
(8Bits)

# F I G. 4

320

200

36
(4Bits)

# F I G. 7

Start

Display Original Picture ⌐101

Display Cursor ⌐102

Change Cursor Cordinates ⌐104

Move Cursor ? 103
Y → Change Cursor Cordinates
N ↓

Read-Out Color Data ⌐105

Calculate Number of Pixels ⌐106

Accumulate Color Appearance Frequencies ⌐107

Select 16 Colors Having Most Occurrences ⌐108

Move Cursor ? 109
Y
N

Select 12-Bit Colors from 8-Bit Colors
Difine Color Palette ⌐110

Generate Computer Graphics ⌐111

Display Picture on Monitor ⌐112

Color Satisfactory ? 113
N
Y

E N D

FIG. 8